# EUROPEAN PATENT SPECIFICATION

(11) **EP 1 555 172 B1**
(45) Date of publication and mention of the grant of the patent: **03.01.2007**
(21) Application number: 05000497.7
(22) Date of filing: 12.01.2005
(51) Int. Cl.: B60R 22/195

(54) **Seat belt apparatus**
Sicherheitsgurtvorrichtung
Dispositif de ceinture de sécurité

(30) Priority: 14.01.2004 JP 2004006451; 24.09.2004 JP 2004276636
(43) Date of publication of application: 20.07.2005
(73) Proprietor: TAKATA CORPORATION, Minato-ku, Tokyo 106-8510 (JP)
(72) Inventor: Nakayama, Tadahiro, Tokyo 106-8510 (JP); Tomita, Hiroshi, Tokyo 106-8510 (JP); Nakano, Yoshiyuki, Tokyo 106-8510 (JP)
(74) Representative: Banzer, Hans-Jörg

(56) References cited:
- EP-A- 1 266 808
- US-A- 6 095 615
- US-A- 6 131 951
- US-B1- 6 250 720

## Description

### [Technical Field of the Invention]

The present invention pertains to a technical field of a seat belt apparatus installed in a seat of a vehicle such as an automobile and particularly to a technical field of a seat belt apparatus in which a pretensioner is actuated to tension a seat belt in the event of emergency situation such as a vehicle collision so as to provide enhanced restraining function.

A seat belt apparatus in accordance with the features of the preamble of claim 1 is known from US-B-6250 720.

Conventionally, seats of vehicles such as automobiles are equipped with seat belt apparatuses which restrain an occupant to prevent the occupant from inertial movement when extremely large deceleration is exerted in the event of emergency such as a vehicle collision, thereby protecting the occupant. In some of them, the seat belt apparatus is equipped with a pretensioner which tensions a seat belt in the event of emergency as mentioned above so as to enhance the restraining function, whereby the occupant is rapidly restrained with large restraining force. The conventional pretensioner is normally installed in the seat belt retractor of the seat belt apparatus. However, some of them are pretensioners of a type installed in a buckle. Such a pretensioner has also been proposed (for example, see Japanese Patent Unexamined Publication No. 2003-54360).

In a seat belt apparatus equipped with a buckle pretensioner disclosed in the above publication, the pretensioner is actuated to pull the buckle in the event of emergency as mentioned above, thereby tensioning the seat belt. In this case, the seat belt apparatus is provided with a kinetic-energy absorbing member with which the buckle comes in contact when the buckle is pulled fully to reach the bottom.

### [Disclosure of the Invention]

### [Problems to be solved by the Invention]

By the way, as the kinetic-energy absorbing member disclosed in the aforementioned publication, there are one having complex shapes, one requiring relatively complicated process relative to a block to form a guide groove or guide hole for a wire pulling the buckle, and one produced from different parts. Accordingly, the kinetic-energy absorbing member is produced from rubber or resin having similar properties as rubber.

However, in case that the kinetic-energy absorbing member of complex shapes or the kinetic-energy absorbing member requiring complicated process as mentioned above is produced from rubber or resin, there is a problem of high cost. In case that the kinetic-energy absorbing member is produced form different parts, there are problems of high cost as well as increase in producing processes.

The present invention was made for under the aforementioned circumstances and the object of the present invention is to provide a seat belt apparatus including a kinetic-energy absorbing member which absorbs kinetic energy when a pull-in member such as a buckle or a lap anchor is fully pulled to reach the bottom during operation and which has a simple shape and is thus made at low cost.

### [Means to solve the Problems]

The aforementioned problems are solved by a seat belt apparatus according to independent claim 1. The dependent claims define preferred and advantageous embodiments of the invention.

To solve the aforementioned problems, the seat belt apparatus of the invention comprises at least a pretensioner for pulling a pull-in member to tension a seat belt in the event of emergency, and further comprising a kinetic-energy absorbing means for absorbing the kinetic energy of said pull-in member when reaching the bottom, wherein the kinetic-energy absorbing means is composed of a metallic tubular member.

A preferred embodiment of the invention is characterized by comprising a peripheral member around the kinetic-energy absorbing means and influenced by the pulling operation of said pull-in member.
A further embodiment is characterized in that said metal is iron or aluminum.
Furthermore, a still further embodiment is characterized in that said pull-in member is a buckle and/or a lap anchor.

### [Effects of the Invention]

According to the seat belt apparatus structured as mentioned above, the pull-in member is pulled by the operation of the pretensioner in the event of emergency. Then, the pull-in member comes in contact with the kinetic-energy absorbing means and the kinetic energy of the pull-in member when reaching the bottom is absorbed by the kinetic-energy absorbing means. Therefore, the pull-in member softly reaches the bottom (softly stops).
Since the kinetic-energy absorbing means of the present invention is composed of a tubular member of a simple shape made of metal, the kinetic-energy absorbing means can be easily manufactured at low cost.

If the seat belt apparatus comprises the peripheral member around the kinetic-energy absorbing means, the kinetic energy of the peripheral member around the kinetic-energy absorbing means and influenced by the pulling operation of the pull-in member is also reduced by that the kinetic energy of the pull-in member when reaching the bottom is absorbed by the kinetic-energy absorbing means.
If iron or aluminum is used as the metal, an existing iron pipe or aluminum pipe can be employed. In this case, the kinetic-energy absorbing member can be further easily manufactured at lower cost.

Further, if the pull-in member is a buckle and/or a lap anchor, the kinetic energy of the buckle and/or the lap anchor when reaching the bottom is absorbed. Therefore, the buckle and/or the lap anchor can further effectively softly reach the bottom (stop).

### [Best Modes for carrying out the Invention]

Hereinafter, embodiments of the present invention will be described with reference to the attached drawings.

### [Brief Explanation of the drawings]

Fig. 1 is a partially cutaway view schematically showing a pretensioner used in an embodiment of a seat belt apparatus according to the present invention.
Figs. 2(a)-2(g) are illustrations schematically showing various kinds of examples of pretensioners to be used as the pretensioner according to the present invention.
Figs. 3(a)-3(g) are illustrations schematically showing further various kinds of examples of pretensioners to be used as the pretensioner according to the present invention.

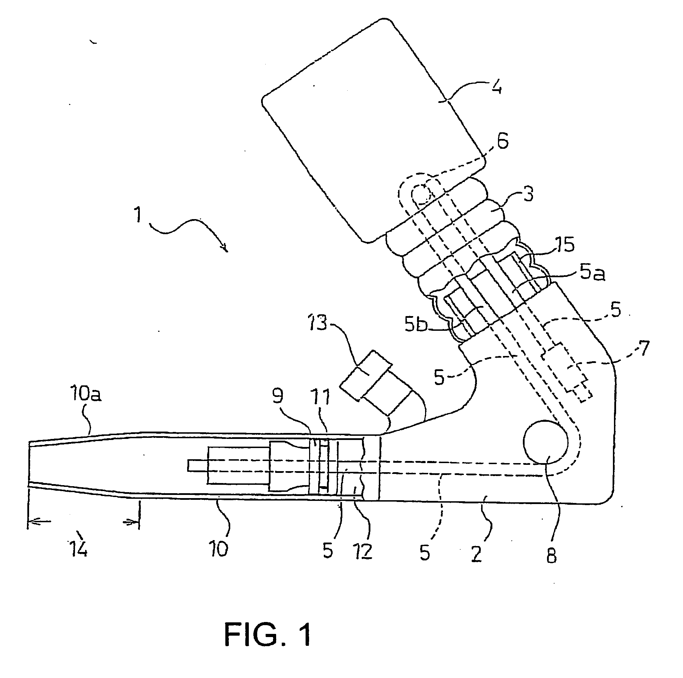

Fig. 1 is a partially cutaway view schematically showing a pretensioner used in an embodiment of a seat belt apparatus according to the present invention.
As shown in Fig. 1, a pretensioner 1 used in a seat belt apparatus of this embodiment is a buckle pretensioner comprising a cover (corresponding to a peripheral member of a pull-in member of the present invention) 3 which can expand and contract in the axial direction. One end of the cover 3 is attached to a bracket 2 and the other end of the cover 3 is attached to a well-known buckle (corresponding to the pull-in member of the present invention) 4. The buckle 4 is of a conventionally known type and is provided at its upper end with a tongue insertion opening (not shown). The buckle 4 is provided in its lower portion (the side opposite to the upper end) with a pulley 6 onto which a wire 5 is wound. One end of the wire 5 is fixed to the bracket 2 by well-known fixing means 7. The wire 5 extends through the inside of the cover 3 and is wound on a pulley 8 which is rotatably fixed to the bracket 2. The wire 5 further extends to be connected to a piston 9.

The piston 9 is housed in a cylinder 10 attached to the bracket 2 such that the piston 9 is arranged slidably and airtightly by a sealing member 11 such as an O-ring. The end of the cylinder 10 (the side opposite to the side mounted to the bracket 2) is formed to be a taper portion 10a of a truncated cone shape with the cylinder diameter continuously decreasing toward the end of the cylinder 10. The cylinder is provided with a pressure chamber 12 formed therein at the side opposite to the taper portion 10a about the piston 9. The pressure chamber 12 is in communication with a gas generator 13 mounted to the bracket 2. The gas generator 13 is actuated at the event of emergency to react reacting substance, thereby generating high-pressure reaction gas. The gas thus generated is introduced into the pressure chamber 12. The reaction gas introduced into the pressure chamber 12 acts on the piston 9 whereby the piston 9 moves toward the end of the cylinder 10 so as to pull the buckle 4 toward the bracket 2 via the wire 5. As the piston 9 moves and reaches the taper portion 10a, the piston 9 plastically deforms the taper portion 10a. The deformation of the taper portion 10a absorbs kinetic energy of the piston 9. That is, the taper portion 10a is structured as an energy absorbing portion 14.

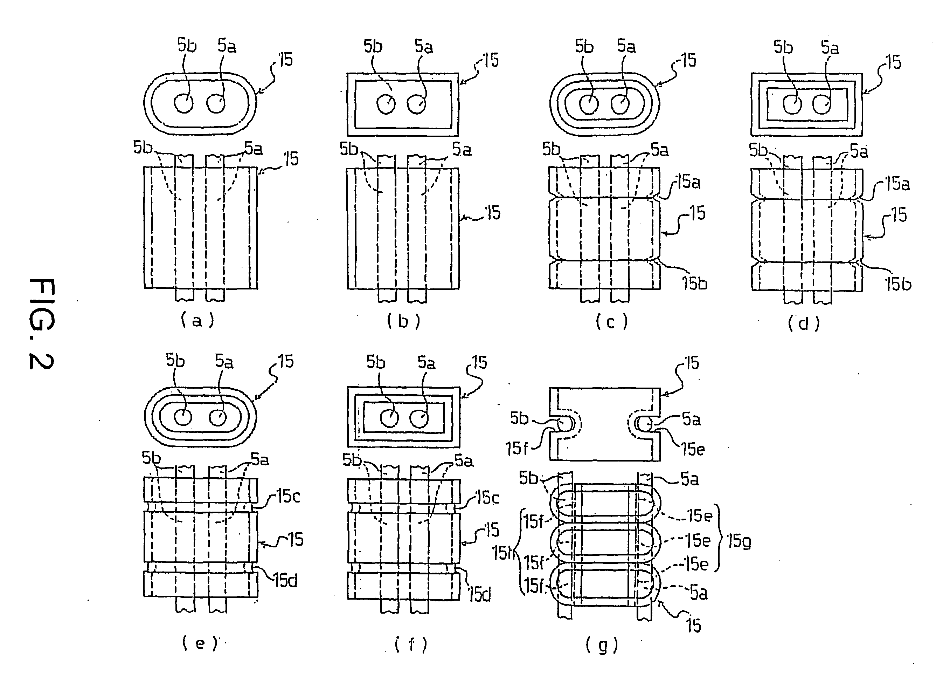

The seat belt apparatus 5 of this embodiment is further provided with a kinetic-energy absorbing member (corresponding to the kinetic-energy absorbing means of the present invention) 15 which is disposed in the cover 3 and is attached to the bracket 2. As shown in Fig. 2(a), the kinetic-energy absorbing member 15 comprises an oval tubular member having thin wall. The tubular member is made of metal such as iron or aluminum. The kinetic-energy absorbing member 15 is arranged such that the axial direction thereof (the axial direction of the tubular member) is equal to the direction of pulling the buckle 4.

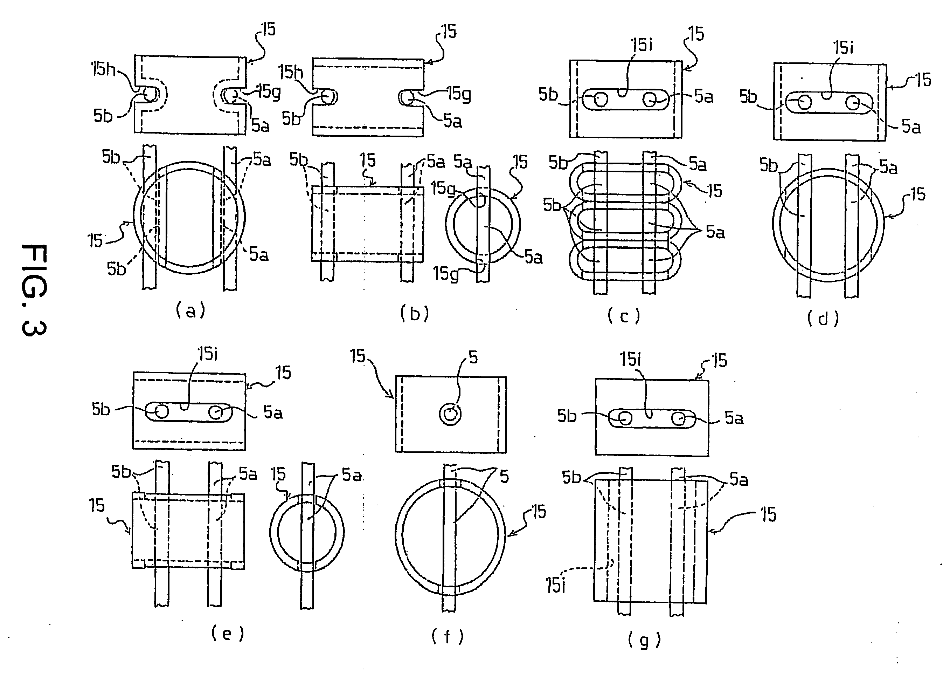

The bracket-side end (the lower end in a lower illustration of Fig. 2(a)), facing the bracket 2, of the kinetic-energy absorbing member 15 is fixed to the bracket 2 and the buckle-side end (the upper end in the lower illustration of Fig. 2(a)), facing the buckle 4, of the kinetic-energy absorbing member 15 is a free end (also in Figs. 2(b) through 2(g) and Figs. 3(a) through 3(g), the bracket-side end of the kinetic-energy absorbing member 15 is the lower end of each illustration and the buckle-side end of the kinetic-energy absorbing member 15 is the upper end of each illustration).
The wire 5 forms a U-turn about the pulley 6 of the buckle 4 so as to have two wire portions 5a, 5b which extend through the inside of the tubular kinetic-energy absorbing member 15.

The other structures of the seat belt apparatus of this embodiment are substantially the same as those of the conventionally-known seat belt apparatus disclosed in the aforementioned Japanese Patent Unexamined Publication No. 2003-54360.

In the seat belt apparatus of this embodiment having the aforementioned structure, in the normal state, the pretensioner 1 is not actuated so that the buckle 4 is held at a predetermined position shown in Fig. 1. In this state, the buckle 4 is spaced apart from the kinetic-energy absorbing member 15 and the kinetic-energy absorbing member 15 is in free state. Here, the position of the buckle-side end of the kinetic-energy absorbing member 15 is set at the buckle side from a maximum permissible contraction position of the cover 3.

In this state, when the aforementioned emergency occurs, the buckle pretensioner 1 is actuated in the same manner as the conventional seat belt apparatus. The gas generator 13 generates high-pressure reaction gas and the reaction gas thus generated is introduced into the pressure chamber 12. Then, the reaction gas introduced into the pressure chamber act on the piston 9 so that the piston 9 rapidly moves toward to the end of the cylinder 10, thereby pulling the wire 5. This causes the buckle 4 to be pulled towards the bracket 2 (in the direction diagonally toward the right below in Fig. 1) with contracting the cover 3.

As the piston 9 comes in contact with the taper portion 10a as the energy absorbing portion 14, the piston 9 continues to move to the left with deforming the taper portion 10a. The deformation of the taper portion 10a absorbs the kinetic-energy of the piston 9.

Since the free end of the shock absorbing member 15 is positioned at the buckle side from the maximum permissible contraction position of the cover 3, the buckle 4 is pulled to come in contact with the buckle-side end of the kinetic-energy absorbing member 15 in tandem with the reach of the piston 9 to the taper portion 10a before the cover 3 is contracted to the maximum permissible contraction position of the cover. After that, the buckle 4 is pulled so as to depress the kinetic-energy absorbing member 15 with the bracket 2 to contract and deform (collapse) the kinetic-energy absorbing member 15. Because of the contraction and deformation of the kinetic-energy absorbing member 15, the kinetic-energy absorbing member 15 absorbs the kinetic energy of the buckle 4.

As the force of the buckle 4 pressing the kinetic-energy absorbing member 15 based on the pulling force of the buckle pretensioner 1 as shown in Fig. 1 becomes equal to the counter force of the kinetic-energy absorbing member 15, the buckle 4 is stopped to be pulled, that is, the buckle 4 reaches the bottom. Since the kinetic-energy absorbing member 15 absorbs the kinetic-energy of the buckle 4 during this, the buckle 4 softly reaches the bottom.

According to the pretensioner 1 of this embodiment, the buckle softly reaches the bottom to stop because the kinetic-energy of the buckle 4 when reaching the bottom is absorbed by the kinetic-energy absorbing member 15. Since the kinetic-energy absorbing member 15 is composed of the thin-walled tubular member of simple shape made of metal such as iron or aluminum, the kinetic-energy absorbing member 15 can be easily manufactured at low cost.

The kinetic energy of the piston 9 moving at high speed is absorbed by the energy absorbing portion 14 just before the buckle 4 reaches the bottom. Since the taper portion 10a as the kinetic-energy absorbing portion 14 is deformed by the movement of the piston 9, the absorption of kinetic energy of the buckle 4 can be achieved with a simple structure.

In addition, the kinetic energy of the buckle 4 when reaching the bottom is absorbed by the kinetic-energy absorbing member 15, whereby the kinetic energy applied to the cover 3 influenced by the pulling operation of the buckle 4 is reduced. Since iron or aluminum is used as the metal, an existing iron pipe or aluminum pipe can be employed. In this case, the kinetic-energy absorbing member 15 can be further easily manufactured at lower cost.

Though the bracket-side end of the kinetic-energy absorbing member 15 is fixed to the bracket 2 in this embodiment, the bracket-side end of the kinetic-energy absorbing member 15 may not be fixed to the bracket 2 so that the both ends of the kinetic-energy absorbing member 15 may be free ends relative to the bracket 2. That is, it is only required that the kinetic-energy absorbing member 15 is arranged between the bracket 2 and the buckle 4. It does not matter whether the end of the kinetic-energy absorbing member 15 is fixed to the bracket 2 or not. In this case, the bracket-side end may be just in contact with the bracket 2. In the state that the bracket-side end of the kinetic-energy absorbing member 15 is in contact with the bracket 2, the position of the buckle-side end of the kinetic-energy absorbing member 15 is set at the buckle side from the maximum permissible contraction position of the cover 3. The same is true for the following examples.

Figs. 2(b) through 2(g) and Fig. 3(a) through 3(g) are illustrations showing different examples of the kinetic-energy absorbing member 15.
In the example shown in Fig. 2(b), the kinetic-energy absorbing member 15 is composed of a thin-walled rectangular tubular member. In the example shown in Fig. 2(c), the kinetic-energy absorbing member 15 is composed of a thin-walled oval tubular member similar to the example of Fig. 2(a), but the tubular member of this example is provided with two V-like grooves 15a, 15b formed at an upper side and a lower side to extend in the peripheral direction for assisting in contraction and deformation of the tubular member. These V-like grooves 15a, 15b facilitate the contraction and deformation of the tubular member, thereby further effectively absorbing the kinetic energy of the buckle when reaching the bottom. In the example shown in Fig. 2(d), the kinetic-energy absorbing member 15 is composed of a thin-walled rectangular tubular member similar to the example of Fig. 2(b), but the tubular member of this example is provided with two V-like grooves 15a, 15b, having the same function as the V-like grooves 15a, 15b in Fig. 2(c), formed at an upper side and a lower side to extend in the peripheral direction.

In the example shown in Fig. 2(e), the kinetic-energy absorbing member 15 is composed of a thin-walled oval tubular member similar to the example of Fig. 2(a). In the example shown in Fig. 2(f), the kinetic-energy absorbing member 15 is composed of a thin-walled rectangular tubular member similar to the example of Fig. 2(b). However, the tubular members of these examples are each provided with U-like grooves 15c, 15d, having the same function as the V-like grooves 15a, 15b in Fig. 2(c), formed at an upper side and a lower side to extend in the peripheral direction. Each of the examples of Fig. 2(b) through 2(f), similar to the example of Fig. 2(a), the kinetic-energy absorbing member 15 is arranged such that the axial direction thereof (the axial direction of the tubular member) is equal to the direction of pulling the buckle 4 and two wire portions 5a, 5b extend through the inside of the tubular member.

In the example shown in Fig. 2(g), the kinetic-energy member 15 comprises a tubular member having an oval section and a thin wall similar to the example of Fig. 2(a). In this example, however, three such tubular members are stacked on each other and are bonded to each other by welding or the like. In this case, the three tubular members are arranged such that the axial directions thereof are perpendicular to the pulling direction of the buckle 4 and the three tubular members are stacked on each other in the pulling direction. The three tubular members are each provided with concaved U-like grooves 15e, 15f formed in opposing arc portions thereof so that when the three tubular members are stacked on each other, the U-like grooves 15e, 15f form guide grooves 15g, 15h through which two wire portions 5a, 5b are inserted and guided, respectively. According to the kinetic-energy absorbing member 15 of this example, the tubular member is easy to collapse and easy to absorb energy as compared to the aforementioned examples, in which the axial direction of the tubular member is equal to the pulling direction of the buckle 4.

In the example of Fig. 3(a), the kinetic-energy absorbing member 15 is composed of a thin-walled tubular member. In this case, the tubular member is arranged such that the axial direction thereof is perpendicular to the pulling direction of the buckle 4. The tubular member is provided with concaved U-like grooves 15e, 15f, formed in opposing arc portions thereof, through which two wire portions 5a, 5b are inserted and guided. According to the kinetic-energy absorbing member 15 of this example, the tubular member is easy to collapse and easy to absorb energy because the axial direction of the tubular member is perpendicular to the pulling direction of the buckle 4.

In the example of Fig. 3(b), the kinetic-energy absorbing member 15 is composed of a thin-walled tubular member having a thin-walled circular section. In this case, the tubular member is arranged such that the axial direction thereof is perpendicular to the pulling direction of the buckle 4. The tubular member is provided with U-like grooves 15e, 15f, formed in opposing ends thereof, through which two wire portions 5a, 5b are inserted and guided. According to the kinetic-energy absorbing member 15 of this example, the tubular member is easy to collapse and easy to absorb energy because the axial direction of the tubular member is perpendicular to the pulling direction of the buckle 4.

In the example shown in Fig. 3(c), the kinetic-energy absorbing member 15 is composed of three thin-walled oval tubular members which are stacked and bonded to each other similar to the example shown in Fig. 2(g). In this case, the kinetic-energy absorbing member 15 is not provided with the U-like grooves 15e, 15f shown in Fig. 2(g). Instead of these, the kinetic-energy absorbing member 15 is provided with oval guide holes 15i through which the two wire portions 5a, 5b extend. The guide holes 15i are formed in the peripheral surfaces of the tubular members to extend in a direction perpendicular to the pulling direction of the buckle 4. According to the kinetic-energy absorbing member 15 of this example, the tubular members are easy to collapse and easy to absorb energy similar to the example shown in Fig. 2(g).

In the example shown in Fig. 3(d), the kinetic-energy absorbing member 15 is composed of a thin-walled tubular member just like the example shown in Fig. 3(a). In this case, the kinetic-energy absorbing member 15 is not provided with the U-like grooves 15e, 15f shown in Fig. 3(a). Instead of these, the kinetic-energy absorbing member 15 is provided with oval guide holes 15i through which the two wire portions 5a, 5b extend. The guide holes 15i are formed in the peripheral surfaces of the tubular member to extend in a direction perpendicular to the pulling direction of the buckle 4. According to the kinetic-energy absorbing member 15 of this example, the tubular member is easy to collapse and easy to absorb energy similar to the example shown in Fig. 3(a).

In the example shown in Fig. 3(e), the kinetic-energy absorbing member 15 is composed of a thin-walled tubular member just like the example shown in Fig. 3(b). In this case, the kinetic-energy absorbing member 15 is not provided with the U-like grooves 15e, 15f shown in Fig. 3(b). Instead of these, the kinetic-energy absorbing member 15 is provided with oval guide holes 15i through which the two wire portions 5a, 5b extend. The guide holes 15i are formed in the peripheral surfaces of the tubular member to extend in a direction perpendicular to the pulling direction of the buckle 4. According to the kinetic-energy absorbing member 15 of this example, the tubular member is easy to collapse and easy to absorb energy similar to the example shown in Fig. 3(b).

In the example shown in Fig. 3(f), the kinetic-energy absorbing member 15 is composed of a thin-walled tubular member just like the example shown in Fig. 3(d). In this case, the kinetic-energy absorbing member 15 is provided with circular guide holes 15j through which a wire portion of the wire 5 extends. In the kinetic-energy absorbing member 15 of this example, the wire 5 extending from a pulley 8 of the bracket 2 to the buckle 4 is directly connected to the buckle 4 without forming a U-turn at the pulley 6 of the buckle 4 like the example shown in Fig. 1. Therefore, only one wire portion 5 extends through the circular guide holes 15j. According to the kinetic-energy absorbing member 15 of this example, the tubular member is easy to collapse and easy to absorb energy similar to the example shown in Fig. 3(d).

In the example shown in Fig. 3(g), the kinetic-energy absorbing member 15 is composed of a thick-walled rectangular tubular member which is provided with guide hole 15i having an oval section formed therein. The tubular member is arranged such that the axial direction thereof is equal to the pulling direction of the buckle 4 similar to the example of Fig. 2(b).

The kinetic-energy absorbing member 15 of any of the examples shown in Figs. 2(b) through 2(g) and Fig. 3(a) through 3(g) is made of metal such as iron or aluminum similar to the example of Fig. 2(a).

Though the energy absorbing portion 14 composed of the taper portion 10a of the cylinder 10 is provided in any of the aforementioned examples, the present invention does not necessarily require this energy portion 14 so that it may be omitted.
Though the pretensioner used for the seat belt apparatus of the present invention has been described as a buckle pretensioner used in the buckle 4 in any of the aforementioned examples, the pretensioner of the seat belt apparatus of the present invention may be applied as a pretensioner used in a lap anchor.

### [Industrial Applicability]

The pretensioner used for the seat belt apparatus of the present invention is a pretensioner which is employed for a seat belt apparatus installed in a seat of a vehicle such as automobile and which is actuated in the event of emergency such as a vehicle collision to tension a seat belt so as to provide improved occupant restraint, and is thus suitably used as a pretensioner of a type of pulling a buckle or a lap anchor, thereby tensioning the seat belt.

## Claims

1. A seat belt apparatus comprising at least a pretensioner for pulling a pull-in member (4) to tension a seat belt in the event of emergency,
comprising a kinetic-energy absorbing means (15) for absorbing the kinetic energy of said pull-in member (4) when reaching the bottom, wherein the kinetic-energy absorbing means (15) is composed of a tubular member made of metal, to a said pull-in member is connected by means of a wire (5) piston (9) movably housed in a cylinder (10) for pulling the pull-in member in case of emergency,
wherein the cylinder has a taper portion (10a) with the cylinder diameter continuously decreasing toward the end of the cylinder, **characterised in that** the piston (9) reaching the taper portion (10a) in case of an emergency plastically deforms the taper portion so that the deformation of the taper portion absorbs kinetic energy of the piston.

2. A seat belt apparatus as claimed in claim 1, further comprising a peripheral member (3) around the kinetic-energy absorbing means (15) and influenced by the pulling operation of said pull-in member (4).

3. A seat belt apparatus as claimed in claim 1 or 2, wherein said metal is iron or aluminum.

4. A seat belt apparatus as claimed in any one of claims 1 through 3, wherein said pull-in member (4) is a buckle and/or lap anchor.

## Patentansprüche

1. Sitzgurtvorrichtung umfassend mindestens einen Vorspanner, um ein Aufnahmeteil (4) zu ziehen, um einen Sitzgurt in einem Notfall zu spannen,
umfassend kinetische Energie absorbierende Mittel (15), um die kinetische Energie des Aufnahmeteiles (4) zu absorbieren, wenn der Boden erreicht ist, wobei die die kinetische Energie absorbierenden Mittel (15) aus einem röhrenförmigen Teil, welches aus Metall hergestellt ist, gebildet sind, wobei das Aufnahmeteil mittels eines Drahtes (5) mit einem Kolben (9) verbunden ist, welcher bewegbar in einem Zylinder (10) untergebracht ist, um das Aufnahmeteil im Notfall zu ziehen,
wobei der Zylinder einen kegelförmigen Abschnitt (10a) aufweist, wobei der Zylinderdurchmesser kontinuierlich zu dem Ende des Zylinders abnimmt,
**dadurch gekennzeichnet,**
**dass** der Kolben (9), welcher im Notfall den kegelförmigen Abschnitt (10a) erreicht, den kegelförmigen Abschnitt verformt, so dass die Verformung des kegelförmigen Abschnitts die kinetische Energie des Kolbens absorbiert.

2. Sitzgurtvorrichtung nach Anspruch 1, weiter ein Umfangsteil (3) umfassend, welches um die die kinetische Energie absorbierenden Mittel (15) herum angeordnet ist und durch den Zugvorgang des Aufnahmeteiles (4) beeinflusst wird.

3. Sitzgurtvorrichtung nach Anspruch 1 oder 2, wobei das Metall Eisen oder Aluminium ist.

4. Sitzgurtvorrichtung nach einem der Ansprüche 1 bis 3, wobei das Aufnahmeteil (4) ein Gurtschloss und/oder eine beckenseitige Verankerung ist.

## Revendications

1. Un dispositif de ceinture de sécurité comprenant au moins un prétendeur pour tirer un organe de traction (4) afin de tendre une ceinture de sécurité en cas de danger,
comprenant un moyen d'absorption de l'énergie cinétique (15) pour absorber l'énergie cinétique dudit organe de traction (4) lorsqu'il atteint le fond, dans lequel le moyen d'absorption de l'énergie cinétique (15) est composé d'un organe tubulaire fait de métal, ledit organe de traction est raccordé au moyen d'un câble (5) à un piston (9) logé de façon amovible dans un cylindre (10) pour tirer l'organe de traction en cas de danger,
dans lequel le cylindre a une partie effilée (10a) avec le diamètre du cylindre diminuant de façon continue vers l'extrémité du cylindre, **caractérisé en ce que** le piston (9), atteignant la partie effilée (10a) en cas de danger, déforme plastiquement la partie effilée, de sorte que la déformation de la partie effilée absorbe l'énergie cinétique du piston.

2. Un dispositif de ceinture de sécurité selon la revendication 1, comprenant en outre un organe périphérique (3) qui est autour du moyen d'absorption de l'énergie cinétique (15) et est influencé par l'action de traction dudit organe de traction (4).

3. Un dispositif de ceinture de sécurité selon la revendication 1 ou 2, dans lequel ledit métal est du fer ou de l'aluminium.

4. Un dispositif de ceinture de sécurité selon l'une quelconque des revendications 1 à 3, dans lequel ledit organe de traction (4) est une boucle et/ou un ancrage ventral.
